# EUROPÄISCHE PATENTANMELDUNG

(11) **EP 4 620 571 A1**
(43) Veröffentlichungstag der Anmeldung: **24.09.2025**
(21) Anmeldenummer: 24164501.9
(22) Anmeldetag: 19.03.2024
(51) Int. Cl.: B01L 9/00, G01N 35/00

(54) **VORRICHTUNG ZUM BEREITSTELLEN VON EINMAL-LABORARTIKELN UNTER EINHALTUNG EINES REINHEITSGRADES FÜR ARBEITEN IM LABOR**

(71) Anmelder: Eppendorf SE, 22339 Hamburg (DE)
(72) Erfinder: HORSTMANN, Frank, 23738 Lensahn (DE)
(74) Vertreter: Hauck Patent- und Rechtsanwälte PartmbB

(57) **Zusammenfassung**

Vorrichtung zum Bereitstellen von Einmal-Laborartikeln unter Einhaltung eines Reinheitsgrades für Arbeiten im Labor mit
• einer Schale aus einem keimundurchlässigen Material umfassend
o eine Bodenwand,
o erste Seitenwände, die von der Bodenwand nach oben vorstehen,
o eine erste Öffnung, die von den oberen Rändern der ersten Seitenwände umgrenzt ist,
o einen ersten Randflansch, der mit den oberen Rändern der ersten Seitenwände verbunden ist und um die erste Öffnung umläuft und
o Stützstrukturen innerhalb der ersten Seitenwände in einem Abstand von der Bodenwand,

• einem plattenförmigen Träger mit
o einer Vielzahl senkrecht zur Grundfläche des Trägers ausgerichteter Löcher,
o der in die erste Öffnung eingesetzt ist und sich auf den Stützstrukturen ab stützt,

• einer Vielzahl Einmal-Laborartikel, die in die Löcher des Trägers eingesetzt sind,
• einer Abdeckung aus einem keimundurchlässigen Material, die den Träger und die dann eingesetzten Einmal-Laborartikel überdeckt und mit einem umlaufenden äußeren Rand auf dem ersten Randflansch aufliegt und
• einer lösbaren Verbindung, über die der äußere Rand der Abdeckung umlaufend abdichtend mit dem ersten Randflansch verbunden ist.

## Beschreibung

Die Erfindung betrifft eine Vorrichtung zum Bereitstellen von Einmal-Laborartikeln unter Einhaltung eines Reinheitsgrades für Arbeiten im Labor.

Pipettenspitzen, Reaktionsgefäße und andere Laborartikel für einmaligen Gebrauch (auch "Einmal-Laborartikel" oder "*Disposables*" genannt) werden insbesondere in wissenschaftlichen und industriellen Labors mit medizinischen, biologischen, chemischen, biochemischen, pharmazeutischen oder gerichtsmedizinischen Anwendungsgebieten zum Behandeln von Proben verwendet. Pipettenspitzen sind kleine Röhrchen aus Kunststoff, die zum Dosieren von Flüssigkeitsproben vorzugsweise im Bereich von 0,1 µl bis 100 ml verwendet werden. Sie haben eine untere Durchgangsöffnung für Flüssigkeit und eine obere Durchgangsöffnung für Luft, wobei sich der Querschnitt der Pipettenspitzen in der Regel von der unteren zur oberen Durchgangsöffnung hin vergrößert. In einem Abstand vom oberen Ende weisen sie am Außenumfang eine umlaufende Schulter, vorstehende axiale Rippen oder andere Stützstrukturen zum Abstützen auf dem Rand einer Öffnung eines Trägers auf. Reaktionsgefäße sind unten geschlossene Röhrchen mit aufklemmbarem, aufschnappbarem oder aufschraubbarem Deckel aus Kunststoff für kleine Probenvolumen im Mikroliterbereich. Reaktionsgefäße werden in verschiedenen Größen angeboten, vorzugsweise im Bereich von 0,1 ml bis 5,0 ml und werden auch als "Mikroreaktionsgefäße" oder "Deckelgefäße" bezeichnet.

Für das Anbringen von Pipettenspitzen am Sitz einer Pipette werden Pipettenspitzen auf Vorrichtungen zum Bereitstellen von Pipettenspitzen bereitgestellt (nachfolgend auch "Vorrichtung" genannt). Diese Vorrichtungen weisen einen plattenförmigen Träger aus Kunststoff (auch 'Lochplatte", "Tray" oder "Wafer" genannt) mit einer Vielzahl Löcher in Matrixanordnung auf. Verbreitet sind insbesondere Träger mit 96 Löchern in acht Reihen und zwölf Spalten. Pipettenspitzen sind von oben in die Löcher eingesetzt, wobei sie aufgrund ihres nach oben sich verbreiternden Durchmessers oder eines Stützelementes am Außenumfang nicht hindurchfallen.

Zudem weisen die Vorrichtungen einen Halter zum Halten des Trägers auf, der als geschlossene Schale (auch "Box" genannt) oder offener Rahmen (auch "Rack" genannt) ausgebildet sein kann. Der mit Pipettenspitzen bestückte Träger ist von oben auf den Halter aufsetzbar, sodass die Pipettenspitzen in den Halter hineinragen.

Bekannt sind auch Vorrichtungen zum Bereitstellen von Pipettenspitzen mit einem Deckel. Der Deckel wird oben auf den Halter oder den Träger aufgesetzt und deckt die Pipettenspitzen zum Schutz vor Verunreinigungen ab. Der Deckel ist z.B. als Stülpdeckel oder Klappdeckel ausgebildet.

Die Pipettenspitzen können durch Aufpressen des Sitzes einer Einkanalpipette oder mehrerer Sitze einer Mehrkanalpipette in die oberen Enden der Pipettenspitzen einzeln oder gleichzeitig zu mehreren von der Vorrichtung abgenommen werden.

Je nach Anwendung werden Pipettenspitzen mit entsprechenden Reinheitsgraden benötigt. Vielfach werden sterile Pipettenspitzen gebraucht. Diese werden vom Hersteller beispielsweise durch Bestrahlung sterilisiert. Zur Sicherung des Reinheitsgrades werden die Pipettenspitzen in den Vorrichtungen zum Bereitstellen von Pipettenspitzen zusätzlich durch Folien, Siegelbänder oder eine zusätzliche Schutzhülle (auch "Containment" genannt) geschützt. Vielfach sind die Vorrichtungen in dicht geschlossene Sterilbeutel eingesetzt. Dies führt zu großen Dimensionen der Verpackungen und zu einem hohen Verpackungsaufwand. Nach dem Öffnen des zusätzlichen Containments und teilweiser Entnahme von Pipettenspitzen besteht ein erhöhtes Risiko der Verunreinigung restlicher Pipettenspitzen. Pipettenspitzen mit geringerem Reinheitsgrad, die ohne ein zusätzliches Containment geliefert werden, können grundsätzlich durch den Anwender autoklaviert werden. Die Einhaltung des sterilen Reinheitszustandes bis zum Gebrauch ist jedoch nicht gewährleistet.

Zudem ist bei bekannten Vorrichtungen zum Bereitstellen von Pipettenspitzen nachteilig, dass diese bei Entnahme von Pipettenspitzen mittels einer Mehrkanalpipette, bei der die Sitze nur zum Teil mit Pipettenspitzen bestückt werden aufgrund der unsymmetrischen Krafteinleitung, leicht umkippen können.

Die Bereitstellung von anderen Einmal-Laborartikeln mit einem geforderten Reinheitsgrad bereitet ähnliche Probleme.

Davon ausgehend liegt der Erfindung die Aufgabe zugrunde, eine Vorrichtung zum Bereitstellen von sterilen Einmal-Laborartikeln für Arbeiten im Labor zur Verfügung zu stellen, die bei platzsparender Ausführung und geringerem Einsatz von Verpackungsmaterial ein Bereitstellen der Einmal-Laborartikel unter Einhaltung von Sterilität oder eines anderen Reinheitsgrades und eine Entnahme von Pipettenspitzen unter teilweiser Bestückung der Ansätze einer Mehrkanalpipette erleichtert.

Die Aufgabe wird durch eine Vorrichtung gemäß Anspruch 1 gelöst. Vorteilhafte Ausführungsarten der Vorrichtung sind in den Unteransprüchen und in der nachfolgenden Beschreibung angegeben.

Die erfindungsgemäße Vorrichtung zum Bereitstellen von Einmal-Laborartikeln unter Einhaltung eines Reinheitsgrades für Arbeiten im Labor umfasst:
- eine Schale aus einem keimundurchlässigen Material umfassend
   o eine Bodenwand,
   o erste Seitenwände, die von der Bodenwand nach oben vorstehen,
   o eine erste Öffnung, die von den oberen Rändern der ersten Seitenwände umgrenzt ist,
   o einen ersten Randflansch, der mit den oberen Rändern der ersten Seitenwände verbunden ist und um die erste Öffnung umläuft und
   o Stützstrukturen innerhalb der ersten Seitenwände in einem Abstand von der Bodenwand,
- einen plattenförmigen Träger mit
   o einer Vielzahl senkrecht zur Grundfläche des Trägers ausgerichteter Löcher,
   o der in die erste Öffnung eingesetzt ist und sich auf den Stützstrukturen ab stützt,
- eine Vielzahl Einmal-Laborartikel, die in die Löcher des Trägers eingesetzt sind,
- eine Abdeckung aus einem keimundurchlässigen Material, die den Träger und die darin eingesetzten Einmal-Laborartikel überdeckt und mit einem umlaufenden äußeren Rand auf dem ersten Randflansch aufliegt und
- eine lösbare Verbindung, über die der äußere Rand der Abdeckung umlaufend abdichtend mit dem ersten Randflansch verbunden ist.

Bei der erfindungsgemäßen Vorrichtung werden die in den plattenförmigen Träger eingesetzten Pipettenspitzen oder andere Einmal-Laborartikel unten durch die Schale aus einem keimundurchlässigen Material und oben durch die Abdeckung aus einem keimundurchlässigen Material abgedeckt. Zudem wird durch die umlaufende abdichtende Verbindung des äußeren Randes der Abdeckung mit dem ersten Randflansch der Zutritt von Keimen zu den Einmal-Laborartikeln verhindert. Hierdurch wird erreicht, dass die in der Vorrichtung angeordneten Einmal-Laborartikel nicht verunreinigt werden und ihren Reinheitsgrad beibehalten. Der Reinheitsgrad kann vom Hersteller durch das Verfahren zur Herstellung der Einmal-Laborartikel bzw. durch eine Nachbehandlung der hergestellten Einmal-Laborartikel erreicht werden. Eine Sterilisation der Einmal-Laborartikel beim Hersteller kann insbesondere durch Bestrahlen mittels UV-, Röntgen-, Beta- oder Gammastrahlung erfolgen. Die Vorrichtung kommt mit einem vergleichsweise geringen Einsatz an Verpackungsmaterial aus, da die Abdeckung nur den Träger und die darin eingesetzten Einmal-Laborartikel überdeckt und am äußeren Rand abdichtend mit dem ersten Randflansch der Schale verbunden ist. Gegenüber einem Folienbeutel oder einer anderen Schutzhülle, die die gesamte Vorrichtung umfassend Schale, Träger und Deckel umhüllt, kann erhebliches Verpackungsmaterial eingespart werden.

Bei dem Reinheitsgrad kann es sich insbesondere um den Reinheitsgrad "steril" handeln, der durch Einhaltung der in der ISO 11137 oder ISO 11135 angegebenen Bedingungen erreicht wird. Ferner kann es sich hierbei um den von der Anmelderin für ihre Produkte verwendeten Reinheitsgrad "PCR-clean" handeln, mit dem DNase- und RNase-freie sowie von PCR-Inhibitoren freie und von menschlicher DNA freie Einmal-Laborartikel bezeichnet werden. Dieser Reinheitsgrad wird im Wesentlichen dadurch erreicht, dass die Einmal-Laborartikel unter Bedingungen hergestellt, die vergleichbar zu einem Reinraum sind. Des Weiteren kann es sich um den von der Anmelderin verwendeten Reinheitsgrad "Protein-free" handeln, mit dem Einmal-Laborartikel bezeichnet werden, die frei von Proteinen sind. Für die Prüfung auf Proteinkontamination wird ein kolorimetrischer Assay verwendet, der bis zu 1 ng/µL detektieren kann.

Gemäß einer Ausführungsart der Erfindung besteht die Abdeckung und/oder die Schale zumindest teilweise aus einem wasserdampfdurchlässigen und keimundurchlässigen Material. Dies ermöglicht ein Autoklavieren der Einmal-Laborartikel in der geschlossenen Vorrichtung. Die geschlossene Vorrichtung kann in einen Autoklaren eingesetzt werden und der Wasserdampf kann durch die zumindest teilweise wasserdampfdurchlässige Abdeckung und/oder Schale hindurch in die Vorrichtung eintreten und bis zu den Einmal-Laborartikeln gelangen und diese sterilisieren. Dadurch, dass die Schale und die Abdeckung aus einem keimundurchlässigen Material bestehen, ist sichergestellt, dass die sterilisierten Einmal-Laborartikel nicht verunreinigt werden, solange die Vorrichtung nicht geöffnet wird. Erst nach dem Öffnen der Abdeckung können Verunreinigungen an die Einmal-Laborartikel herangelangen. Bei dieser Ausführungsart kann die Sterilisation der Einmal-Laborartikel beim Hersteller der Vorrichtung und/oder beim Anwender erfolgen. Bei dieser Ausführungsart bestehen die Schale, der Täger, die Pipettenspitzen, die Abdeckung und die lösbare Verbindung aus autoklavierbarem Material.

Gemäß einer weiteren Ausführungsart besteht die Schale aus einem Kunststoff. Gemäß einer weiteren Ausführungsart besteht die Schale aus einem steifen Kunststoff. Eine Schale aus einem steifen Kunststoff kann den Kräften beim Aufpressen von Pipettenspitzen auf eine Pipette besser standhalten als eine Schale aus einem weichen Material. Ferner begünstigt die steife Schale ein Übereinanderstapeln mehrerer Vorrichtungen. Beispielsweise besteht die Schale aus Propylen oder Polyethylen. Gemäß einer weiteren Ausführungsart ist die Schale spritzgegossen. Gemäß einer weiteren Ausführungsart ist die Schale einteilig spritzgegossen.

Gemäß einer weiteren Ausführungsart weist die Schale eine Grundfläche entsprechend einer standardisierten Mikroplatte auf und/oder weist der Träger eine Anordnung von Löchern entsprechend der Anordnung von Vertiefungen (auch als "Näpfchen" oder: *"Wells"* bezeichnet) einer standardisierten Mikroplatte auf. In der vorliegenden Anmeldung sind mit einer "standardisierten Mikroplatte" solche Mikroplatten (Mikrotiterplatten) bezeichnet, die entsprechend den Empfehlungen der "Society for Biomolecular Screening (SBS)" durch das American National Standard Institute (ANSI) standardisiert sind (ANSI SLAS, 1 bis 4 - 2004 und ANSI SLAS, 6 - 2012). Eine Schale mit einer Grundfläche entsprechend einer standardisierten Mikroplatte hat insbesondere den Vorteil, dass sie auf den Arbeitsplätzen von Laborautomaten positionierbar ist, die an die Grundfläche von standardisierten Mikroplatten angepasst sind. Die Anordnung von Löchern entsprechend der Anordnung von Vertiefungen einer standardisierten Mikroplatte hat insbesondere den Vorteil, dass sie ein Behandeln der Einmal-Laborartikel mittels Laborgeräten erleichtert, die an eine standardisierte Mikroplatte angepasst sind. So können beispielsweise Pipettenspitzen aus einer Anordnung von Löchern, die der Anordnung von Vertiefungen einer standardisierten Mikroplatte entspricht, mittels einer Mehrkanalpipette aufgenommen und abgegeben werden, bei der der Abstand der Kanäle an die Vertiefungen der standardisierten Mikroplatte angepasst ist.

Gemäß einer Ausführungsart sind die Einmal-Laborartikel Pipettenspitzen. Gemäß einer weiteren Ausführungsart sind die Einmal-Laborartikel Reaktionsgefäße.

Gemäß einer Ausführungsart ist die Oberseite des Trägers im Wesentlichen in derselben Ebene wie die Oberseite des ersten Randflansches oder höher angeordnet.

Dadurch, dass der plattenförmige Träger mit seiner Oberseite im Wesentlichen in derselben Ebene wie die Oberseite des Randflansches oder höher angeordnet ist, kann eine Mehrkanalpipette auch mit einem Teil ihrer Sitze auf Pipettenspitzen in der Nähe eines Randes des Trägers aufgepresst werden, ohne dass die Vorrichtung durch die seitliche Krafteinleitung umkippt. Hierdurch wird ein sicheres und ökonomisches Aufnehmen einer reduzierten Anzahl gerade benötigter Pipettenspitzen erleichtert. Gemäß einer weiteren Ausführungsart weisen die Einmal-Laborartikel von der Oberseite des Trägers vorstehende Kopfabschnitte auf und weist die Abdeckung einen Zentralbereich auf, der bezüglich des äußeren Randes der Abdeckung nach oben vorsteht und die Kopfabschnitte der Einmal-Laborartikel überdeckt. Bei dem Kopfabschnitt der Einmal-Laborartikel handelt es sich beispielsweise um einen Kopfabschnitt einer Pipettenspitze mit einer Schulter am unteren Rand zum Aufsetzen auf den Rand eines Loches oder es handelt sich um einen Bund am oberen Rand eines Laborgefäßes mit einem über ein Filmscharnier angebundenen Klappdeckel.

Gemäß einer weiteren Ausführungsart umfasst die Abdeckung:
∘ eine Deckwand,
∘ zweite Seitenwände, die von den seitlichen Rändern der Deckwand nach unten vorstehen,
∘ eine zweite Öffnung, die von den unteren Rändern der zweiten Seitenwände umgrenzt ist und
∘ einen zweiten Randflansch, der mit den unteren Rändern der zweiten Seitenwände verbunden ist und um die zweite Öffnung umläuft, wobei
∘ der zweite Randflansch auf dem ersten Randflansch aufliegt und über die lösbare Verbindung umlaufend abdichtend mit diesem verbunden ist.

Bei dieser Ausführungsart ist die Abdeckung als Haube ausgebildet. Die Kopfabschnitte von Einmal-Laborartikeln können durch die zweite Öffnung der Abdeckung hindurch in die haubenartige Abdeckung eingreifen und werden von dieser aufgenommen.

Gemäß einer weiteren Ausführungsart ist der zweite Randflansch am äußeren Rand mit einer nach außen vorstehenden Aufreißlasche verbunden. Zum Öffnen der Abdeckung kann die Aufreißlasche gegriffen werden, wodurch das Öffnen erleichtert wird. Bevorzugt steht die Aufreißlasche über den äußeren Rand des ersten Randflansches nach außen vor, wodurch das Greifen der Aufreißlasche erleichtert wird.

Gemäß einer anderen Ausführungsart ist die Abdeckung eine Folie, die an den oberen Enden der Kopfabschnitte der Einmal-Laborartikel anliegt und an ihrem äußeren Rand umlaufend abdichtend mit dem ersten Randflansch verbunden ist. Die Folie ist beispielsweise über die Kopfabschnitte gespannt und mit ihrem äußeren Rand am ersten Randflansch festgelegt.

Gemäß einer anderen Ausführungsart stehen die Einmal-Laborartikel nicht von der Oberseite des Trägers vor. Bei dieser Ausführungsart können die Einmal-Laborartikel Kopfabschnitte aufweisen, die komplett in Löchern des Trägers angeordnet und gehalten sind. Hierfür können wir die Einmal-Laborartikel auf umlaufenden Schultern des Trägers abgestützt sein, die sich am unteren Rand der Löcher befinden.

Gemäß einer Ausführungsart besteht der Träger aus einem Kunststoff. Gemäß einer weiteren Ausführungsart besteht der Träger aus einem steifen Kunststoff. Gemäß einer weiteren Ausführungsart besteht der Träger aus Polypropylen. Gemäß einer weiteren Ausführungsart ist der Träger spritzgegossen. Gemäß einer weiteren Ausführungsart ist der Träger einteilig spritzgegossen.

Gemäß einer weiteren Ausführungsart besteht die Abdeckung insgesamt aus einem wasserdampfdurchlässigen und keimundurchlässigen Material. Dies begünstigt eine baulich besonders einfache Ausführung der Abdeckung und ein schnelles Autoklavieren der Einmal-Laborartikel.

Gemäß einer weiteren Ausführungsart umfasst die Schale und/oder die Abdeckung einen Grundkörper aus einem steifen Kunststoff mit mindestens einem Fenster und mindestens ein wasserdampfdurchlässiges und keimundurchlässiges Abdeckelement, dass das mindestens eine Fenster abdeckt und randseitig um das Fenster umlaufend abdichtend mit dem Grundkörper verbunden ist. Dies begünstigt die Verwendung von Folien, Vliesen oder anderen flexiblen Flachmaterialien als wasserdampfdurchlässige und keimundurchlässige Abdeckelemente bei stabiler Ausführung der Vorrichtung. Die stabile Ausführung ist insbesondere vorteilhaft für das Stapeln mehrerer Vorrichtungen aufeinander und für den Transport mittels Greifer eines Laborautomaten.

Gemäß einer weiteren Ausführungsart umfasst der zweite Randflansch ein zu einem unteren Rand einer der beiden zweiten Seitenwände paralleles Filmscharnier. Bei dieser Ausführungsart kann die Abdeckung hochgeklappt werden, um die Einmal-Laborartikel für die Benutzung zugänglich zu machen. Falls nur ein Teil der Einmal-Laborartikel aus der Vorrichtung entnommen wird, können die restlichen Einmal-Laborartikel durch Zuklappen der Abdeckung geschlossen werden. Zum Aufklappen und Zuklappen der Abdeckung muss die lösbare Verbindung zwischen dem ersten Randflansch und dem zweiten Randflansch gelöst werden. Der Teil der Verbindung zwischen erstem Randflansch und zweitem Randflansch, der außerhalb des Filmscharniers verläuft, wird nicht gelöst, um die Abdeckung und die Schale über das Filmscharnier miteinander zu verbinden. Um ein unbeabsichtigtes Lösen dieses Teils der Verbindung zu verhindern, kann die Verbindung dort stärker als in den übrigen Teilen oder unlösbar ausgebildet werden, sodass die Abdeckung nur unter erhöhtem Kraftaufwand oder unter teilweiser Zerstörung der Abdeckung oder der Schale vollständig abgetrennt werden kann.

Gemäß einer weiteren Ausführungsart verläuft die Verbindung des zweiten Randflansches mit dem ersten Randflansch ausschließlich außerhalb des Filmscharniers. Grundsätzlich ist es auch möglich, dass die Verbindung zusätzlich innerhalb des Filmscharniers verläuft, wobei dieser Teil der Verbindung dann lösbar ausgebildet sein muss, um die Abdeckung entlang des Filmscharniers aufzuklappen.

Gemäß einer weiteren Ausführungsart ist der äußere Rand durch eine lösbare Schweißverbindung, Siegelverbindung oder Klebeverbindung mit dem ersten Randflansch verbunden und/oder ist das Abdeckelement durch eine Schweißverbindung, Siegelverbindung oder Klebeverbindung mit dem Grundkörper verbunden. Bei der Schweißverbindung werden Fügeteile im Bereich der Verbindung angeschmolzen oder aufgeweicht und unter Ausübung von Druck miteinander verbunden. Bei der Siegelverbindung weist mindestens eines der beiden Fügeteile auf einer Seite eine Folie oder Beschichtung auf, die im Verbindungsbereich oberflächlich angeschmolzen bzw. aufgeweicht und mit dem Verbindungsbereich des anderen Fügeteils verbunden wird. Bei der Klebeverbindung wird die Verbindung mithilfe eines Klebstoffes hergestellt, der die zwischen die beiden Fügeteile eingebracht wird.

Gemäß einer weiteren Ausführungsart steht die Aufreißlasche vom äußeren Rand eines Teils des zweiten Randflansches nach außen vor, der dem Teil des zweiten Randflansches gegenüberliegt, der das Filmscharnier umfasst. Hierdurch wird das Ablösen der Abdeckung von der Aufreißlasche aus bis zum Filmscharnier erleichtert.

Gemäß einer weiteren Ausführungsart ist die Schale ein Spritzgussteil (auch "Kunststoff-Spritzgussteil" genannt) oder ein Tiefziehteil oder ein gefaltetes Teil oder eine Kombination aus einem der vorgenannten Teile mit einem flexiblen Abdeckelement und/oder ist der Träger ein Spritzgussteil oder ein Stanzteil und/oder ist die Abdeckung ein Spritzgussteil oder ein Tiefziehteil oder ein gefaltetes Teil oder eine Kombination aus einem der vorgenannten Teile mit einem flexiblen Abdeckelement.

Gemäß einer weiteren Ausführungsart ist das wasserdampfdurchlässige und keimdurchlässige Material ein Vliesstoff aus Kunststofffasern oder ein Papier.

Gemäß einer weiteren Ausführungsart besteht die Abdeckung aus einem wasserdampfdurchlässigen und keimundurchlässigen Vliesstoff aus Kunststofffasern oder aus einem Papier. Gemäß einer weiteren Ausführungsart ist der Vliesstoff ein autoklavierbarer Vliesstoff oder ist das Papier ein autoklavierbares Papier. Gemäß einer weiteren Ausführungsart ist das Papier ein Sterilisationspapier oder ein medizinisches Papier. Gemäß einer weiteren Ausführungsart weist der Vliesstoff oder das Papier Poren mit einer Porengröße von maximal 1 µm, vorzugsweise von maximal 0,6 µm, besonders bevorzugt von maximal 0,2 µm auf. Gemäß einer weiteren Ausführungsart ist das flexible Flachmaterial ein Polyethylen-Vlies. Gemäß einer weiteren Ausführungsart ist das flexible Flachmaterial ein hochdichtes Polyethylen-Vlies. Gemäß einer weiteren Ausführungsart ist das flexible Flachmaterial ein Polyethylen-Spinnvlies. Gemäß einer weiteren Ausführungsart ist das flexible Flachmaterial ein hochdichtes Polyethylen-Vlies, das von der Firma DuPont unter der Markenbezeichnung "Tyvek^{®}" vermarktet wird. Gemäß einer weiteren Ausführungsart ist das Flachmaterial entlang einer keimundurchlässigen Siegelnaht, Schweißnaht oder Klebenaht auf den ersten Randflansch aufgesiegelt, aufgeschweißt oder aufgeklebt.

Schließlich betrifft die Erfindung die Verwendung der Vorrichtung nach einem der Ansprüche 1 bis 14 oder einer der zuvor beschriebenen Ausführungsarten, bei der die Vorrichtung beim Hersteller sterilisiert und mit den Einmal-Laborartikeln im sterilen Zustand an den Anwender ausgeliefert wird und/oder bei der die Vorrichtung mit den darin angeordneten Einmal-Laborartikeln beim Anwender sterilisiert wird. Das Sterilisieren beim Hersteller kann insbesondere durch Bestrahlen erfolgen. Das Sterilisieren beim Anwender kann insbesondere durch Autoklavieren erfolgen.

Die Erfindung wird nachfolgend anhand der anliegenden Zeichnungen von Ausführungsbeispielen näher erläutert. In den Zeichnungen zeigen:
- Fig. 1: eine Vorrichtung zum Bereitstellen von Pipettenspitzen mit einer haubenartigen Abdeckung mit Abdeckelement und Sterilisationspapier in einer Perspektivansicht schräg von oben;
- Fig. 2: dieselbe Vorrichtung bei teilweise abgelöster und hochgeklappter Abdeckung in einer Perspektivansicht schräg von der Seite;
- Fig. 3: dieselbe Vorrichtung in einer Ansicht von der gegenübeliegenden Seite;
- Fig. 4: dieselbe Vorrichtung in einer vergrößerten Detailansicht;
- Fig. 5: dieselbe Vorrichtung in einem perspektivischen Sprengbild;
- Fig. 6a,: b eine Pipettenspitze in einer Seitenansicht (Fig. 6a) und in einem Längsschnitt (Fig. 6b);

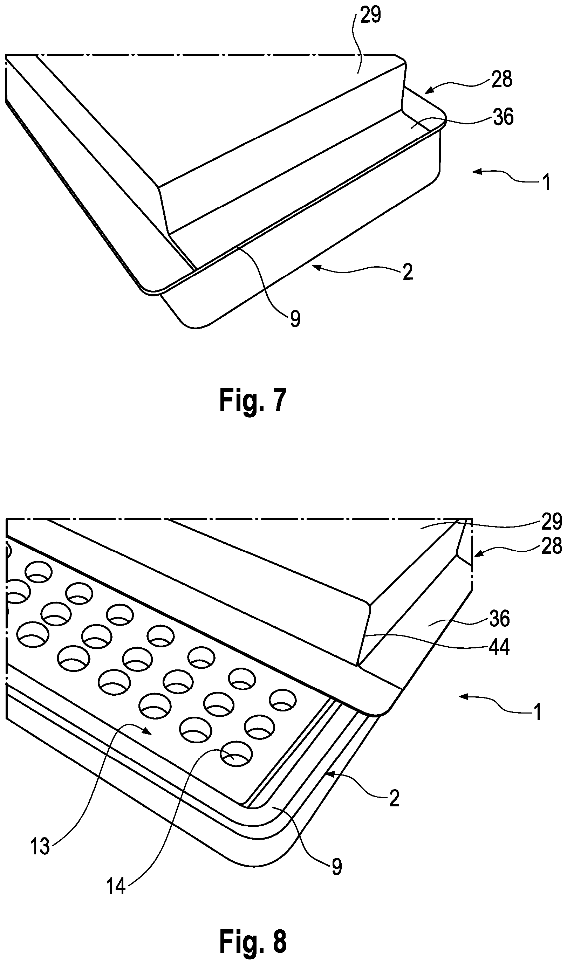

- Fig. 7: eine andere Vorrichtung zum Bereitstellen von Pipettenspitzen mit einer Schale aus Kunststoff und einer Abdeckung aus gefaltetem Faservlies in einer Perspektivansicht schräg von oben;
- Fig. 8: dieselbe Vorrichtung mit abgelöster und teilweise entfernter Abdeckung in einer Perspektivansicht schräg von oben.

In der vorliegenden Anmeldung beziehen sich die Angaben "oben" und "unten" sowie "vertikal" und "horizontal" auf die Vorrichtung mit geschlossener Abdeckung, die mit der Unterseite der Bodenwand auf einen horizontalen Untergrund aufgesetzt ist.

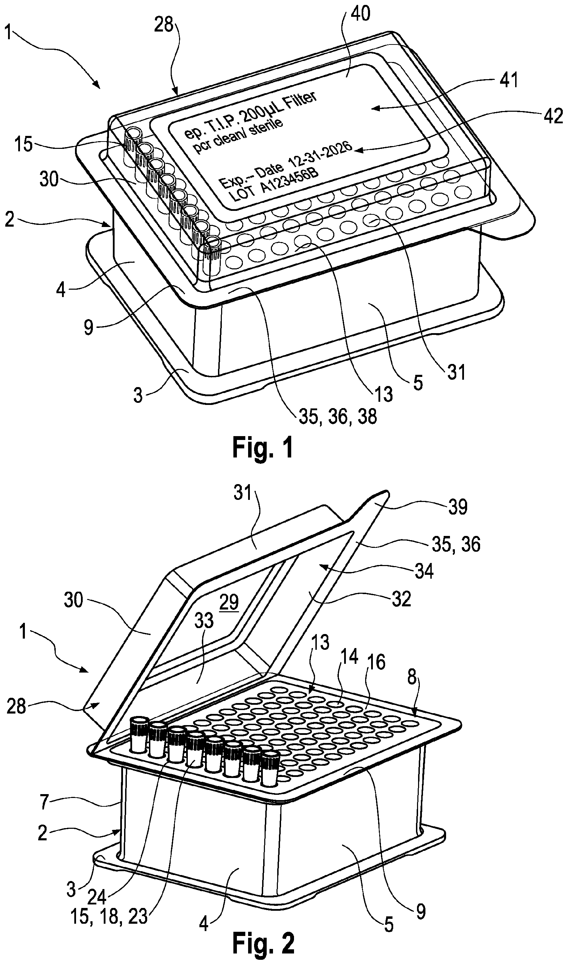

Gemäß Fig. 1 bis 3 umfasst die erfindungsgemäße Vorrichtung 1 zum Bereitstellen von Pipettenspitzen (Box) eine im Wesentlichen kastenförmige Schale 2. Diese weist eine im Wesentlichen rechteckige Bodenwand 3 auf, von der Seitenwände 4, 5, 6, 7 nach oben vorstehen.

Die Bodenwand 3 steht seitlich bezüglich der ersten Seitenwände 4, 5, 6, 7 etwas nach außen vor.

Eine erste Öffnung 8 ist von den oberen Rändern der ersten Seitenwände 4, 5, 6, 7 umgrenzt. Ein erster Randflansch 9 ist mit den oberen Rändern der ersten Seitenwände 4, 5, 6, 7 verbunden und läuft ununterbrochen und glatt um die erste Öffnung 8 um. Die Oberseite des ersten Randflansches 9 ist in einer horizontalen Ebene angeordnet.

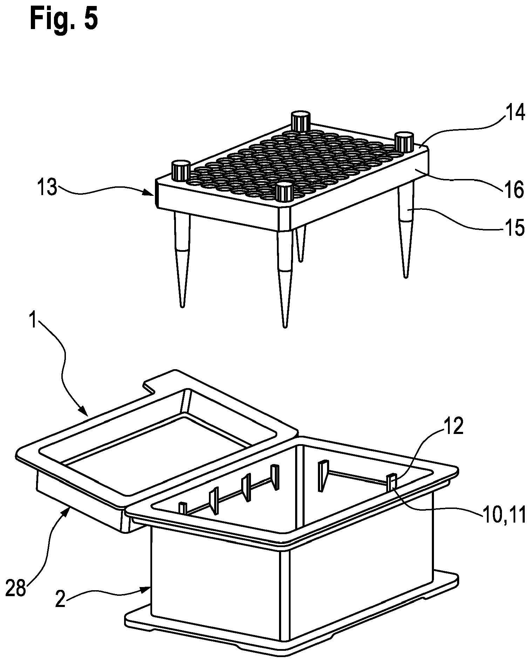

Innerhalb der ersten Seitenwände 4, 5, 6, 7 sind gemäß Fig. 5 in einem Abstand von der Bodenwand 2 Stützstrukturen 10 angeordnet. Hierbei handelt es sich beispielsweise um vertikale Rippen 11, die von der Innenseite der ersten Seitenwände vorstehen. Am oberen Rand der Stützstrukturen 12 befinden sich Stützkanten 11 in einem Abstand unter der horizontalen Ebene, die in die Oberseite des ersten Randflansches 9 fällt.

Die Schale 2 ist einteilig einem Kunststoff spritzgegossen, beispielsweise aus Polypropylen oder Polycarbonat.

Ferner umfasst die Vorrichtung 1 einen im Wesentlichen plattenförmigen und im Wesentlichen rechteckigen Träger 13. Der Träger 13 weist insgesamt 96 kreisrunde Löcher 14 auf, die vertikal ausgerichtet sind. Die Löcher 14 sind in acht Reihen und zwölf Spalten ausgerichtet. Sie sind so bemessen, dass Pipettenspitzen 15 bestimmter Größe und Form darin einsetzbar und mit einer Schulter an der Unterseite eines Kopfabschnittes jeweils auf dem Rand eines Loches 14 abstützen, ohne durch dieses hindurchzufallen.

Der Träger 13 kann beispielsweise massiv oder materialsparend mit einer Deckwand 16 und einer mit den seitlichen Rändern der Deckwand verbundenen und vertikal nach unten vorstehenden, umlaufenden Schürze 17 ausgebildet sein. Ferner können an den Löchern 14 von der Unterseite der Deckwand 16 Hülsen senkrecht nach unten vorstehen, welche die Löcher 14 nach unten verlängern und die Pipettenspitzen 15 unterhalb der Löcher 14 in einem kurzen vertikalen Abschnitt seitlich führen.

Die Grundfläche des Trägers 13 entspricht im Wesentlichen der Grundfläche einer standardisierten Mikroplatte mit 96 Vertiefungen. Infolgedessen kann eine Gruppe Pipettenspitzen 15, die mittels einer an die standardisierte Mikroplatte angepassten Mehrkanalpipette von dem Träger 13 abgenommen wird, mittels der Mehrkanalpipette in eine Gruppe Aufnahmen einer standardisierten Mikroplatte eingeführt werden.

Der Träger 13 ist in die erste Öffnung 8 der Schale 2 eingesetzt und mit dem unteren Rand der Schürze 17 auf den Stützkanten 12 der Stützstrukturen 10 abgestützt. Die Position der Stützkanten 12 und die Höhe des Trägers 13 im Randbereich sind so gewählt, dass die Oberseite des Trägers 13 in derselben Ebene wie die Oberseite des ersten Randflansches 9 oder geringfügig darüber angeordnet ist.

Der Träger 13 ist bevorzugt aus Kunststoff spritzgegossen. Zum Einsatz kommen können insbesondere die Kunststoffe Polypropylen, Polycarbonat, AcrylnitrilButadien-Styrol-Copolymere (ABS), Polystyrol (PS).

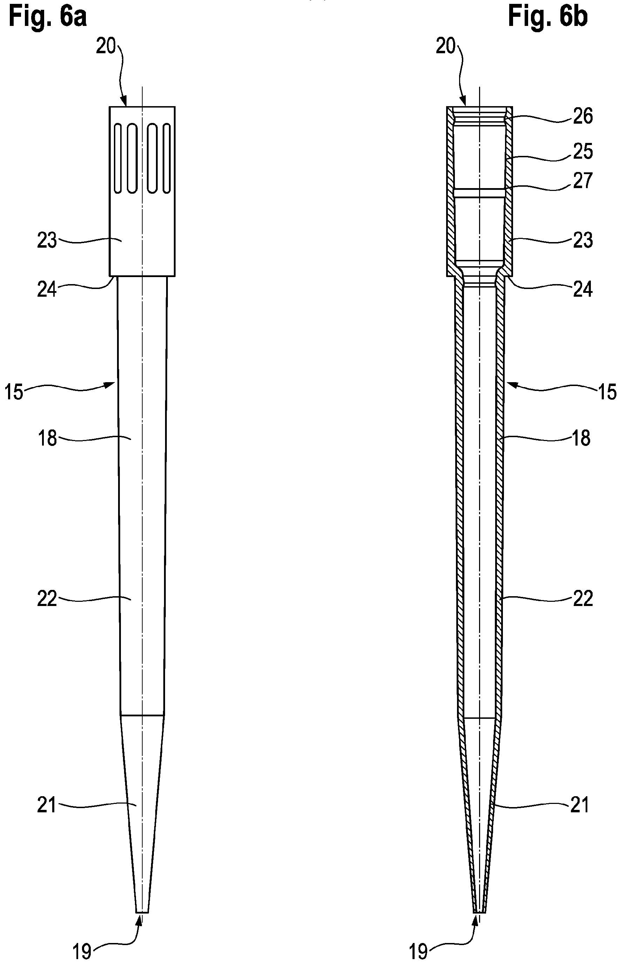

Die Pipettenspitzen 15 haben gemäß Fig. 6 jeweils einen länglichen, rohrförmigen Körper 18, der am unteren Ende eine untere Öffnung 19 und am oberen Ende eine obere Öffnung 20 aufweist. Die untere Öffnung 19 ist kleiner als die obere Öffnung 20.

Generell nimmt der innere und der äußere Durchmesser des rohrförmigen Körpers 18 von der unteren Öffnung 19 zu der oberen Öffnung 20 hin zu. Der rohrförmige Körper 18 hat beispielsweise unten einen konischen Anfangsabschnitt 21, darüber einen Mittelabschnitt 22 mit einem kleineren Konuswinkel als der Anfangsabschnitt 21 und darüber einen zylindrischen Kopfabschnitt 23 mit größerem Außendurchmesser als am oberen Ende des Mittelabschnittes 22. Angrenzend an dem Mittelabschnitt 22 läuft der Unterseite des Kopfabschnittes 23 am äußeren Umfang des rohrförmigen Körpers 18 eine nach unten gerichtete Schulter 24 um.

Neben der oberen Öffnung 20 weist der rohrförmige Körper 18 am inneren Umfang einen im Wesentlichen konischen oder zylindrischen Sitzbereich 25 für einen konischen oder zylindrischen Ansatz einer Pipette auf. Der Sitzbereich 25 erstreckt sich in den Kopfabschnitt 23 hinein und hat einen Konuswinkel von beispielsweise 2° bis 6°.

Der rohrförmige Körper 18 weist am inneren Umfang im Sitzbereich 25 eine oder mehrere Dichtstrukturen 26 in Form von geschlossenen umlaufenden Dichtwulsten zum Abdichten auf dem Ansatz auf.

Unterhalb der Dichtstrukturen 26 ist am inneren Umfang des Kopfabschnittes 23 eine Führungsstruktur 27 zum Führen des Ansatzes beim Einpressen in die Pipettenspitze 15 vorhanden.

Die Pipettenspitzen 15 sind gemäß Fig. 1 mit ihrem rohrförmigen Körper 18 in die Löcher 14 des Trägers 13 eingesetzt und stützen sich mit der Schulter 24 am Rand der Löcher 14 auf der Oberseite des Trägers 13 ab.

Mit dem Kopfabschnitt 23 stehen die Pipettenspitzen 15 von der Oberseite des Trägers 13 nach oben vor.

Schließlich weist die Vorrichtung eine Abdeckung 28 auf. Diese weist eine im Wesentlichen rechteckige Deckwand 29 auf. Zweite Seitenwände 30, 31, 32, 33 stehen von den seitlichen Rändern der Deckwand 29 nach unten vor. Ferner weist die Abdeckung 28 eine zweite Öffnung 34 auf, die von den unteren Rändern der zweiten Seitenwände 30, 31, 32, 33 umgrenzt ist. Ein äußerer Rand 35 in Form eines zweiten Randflansches 36 ist mit den unteren Rändern der zweiten Seitenwände 30, 31, 32, 33 verbunden und läuft um die zweite Öffnung 34 um. Die Unterseite des zweiten Randflansches 36 ist in einer horizontalen Ebene angeordnet.

An einer langen Seite der Abdeckung 28 weist der zweite Randflansch 36 eine zu dieser Seite parallele, geradlinige Wandstärkenverringerung 37 an der Oberseite auf.

Der zweite Randflansch 36 liegt auf dem ersten Randflansch 9 auf und ist umlaufend abdichtend mit diesem verbunden. Der zweite Randflansch 36 und der erste Randflansch 9 sind im Wesentlichen deckungsgleich ausgebildet. Die Kopfabschnitte 23 der Pipettenspitzen 14 ragen durch die zweite Öffnung 34 hindurch in die haubenartige Abdeckung 28 hinein.

Der zweite Randflansch 36 ist über eine lösbare Verbindung 38 lösbar mit dem ersten Randflansch 9 verbunden, vorzugsweise durch eine lösbare Schweißverbindung. Zwischen der Wandstärkenverringerung 37 und dem Träger 12 ist der zweite Randflansch 35 lösbar mit dem ersten Randflansch 9 verbunden. Auf der vom Träger 12 abgewandten Seite der Wandstärkenverringerung 37 ist der zweite Randflansch 36 unlösbar oder nur mit deutlich erhöhtem Kraftaufwand lösbar mit dem ersten Randflansch 9 verbunden.

Auf der Seite gegenüber der Wandstärkenverringerung 37 weist der zweite Randflansch 36 eine bezüglich des ersten Randflansches 9 nach außen vorstehende Aufreißlasche 39 auf.

Die Abdeckung 28 ist einteilig aus Kunststoff spritzgegossen, vorzugsweise aus demselben Kunststoff, wie die Schale 2 oder aus einem Kunststoff, der mit dem Kunststoff der Schale 2 gut verschweißbar ist.

Die Abdeckung 28 weist in der Deckwand 29 ein Fenster 40 auf. Das Fenster ist mit einem Abdeckelement 41 aus einem wasserdampfdurchlässigen und keimundurchlässigen Material abgedeckt. Das Abdeckelement 41 ist randseitig um das Fenster umlaufend abdichtend mit der Deckwand 29 verbunden.

Auf eine aufwändige Bedruckung der Kunststoffflächen der Vorrichtung kann im Wesentlichen verzichtet werden.

Für das Abdeckelement 41 wird beispielsweise das Vliesmaterial Tyvek^{®} oder ein Sterilisationspapier verwendet.

Das Abdeckelement 41 ist gut bedruckbar. Ein Aufdruck 42 mit Informationen über das Produkt (Hersteller, Produktbezeichnung, Nennvolumen, Ablaufzeit) ist auf das Abdeckelement 41 aufgebracht.

Sämtliche Bestandteile der Vorrichtung 1 sind aus autoklavierbaren Materialien hergestellt.

Aufgrund der geschlossenen Oberflächen von Schale 2 und Abdeckung 28 und der dichten Verbindungen zwischen Abdeckung 28 und Schale 2 sowie des Abdeckelementes 41 und der Abdeckung 28 sind die Pipettenspitzen 14 vor dem Eindringen von Keimen aus der Umgebung geschützt in der Vorrichtung 1 untergebracht. Die Vorrichtung 1 ist in einen Autoklaven einsetzbar und aufgrund der Wasserdampfdurchlässigkeit des Abdeckelementes 41 sind die Pipettenspitzen 14 in der Vorrichtung 1 autoklavierbar.

Für das Entnehmen von Pipettenspitzen 14 wird die lösbare Verbindung 38 zwischen dem ersten Randflansch 9 und dem zweiten Randflansch 36 gelöst. Hierfür kann mit der mit der einen Hand die Schale 2 festgehalten und mit der anderen Hand die Aufreißlasche 39 abgezogen werden. Die außerhalb der Wandstärkenverringerung 37 angeordnete Verbindung zwischen dem ersten Randflansch 9 und dem zweiten Randflansch 36 kann aufgrund ihrer erhöhten Festigkeit nicht gelöst werden und bleibt erhalten. Infolgedessen wird im Bereich der Wandstärkenverringerung 37 ein Filmscharnier 43 verwirklicht, um das herum die Abdeckung 28 aufklappbar bzw. zuklappbar ist. Zum Entnehmen von Pipettenspitzen 14 wird die Abdeckung 28 um das Filmscharnier 41 aufgeklappt. Dadurch, dass die Kopfabschnitte 23 oberhalb der Ebene des ersten Randflansches 9 positioniert sind, lassen sich randständige Pipettenspitzen 14 ohne die Gefahr eines Umkippens der Schale 2 aus der Vorrichtung 1 entnehmen. Für den Schutz restlicher Pipettenspitzen 14 vor Verunreinigungen wird die Abdeckung 28 wieder zugeklappt. Durch die flächige Anlage des zweiten Randflansches 36 am ersten Randflansch 9 wird ein Eindringen von Verunreinigungen weitgehend verhindert.

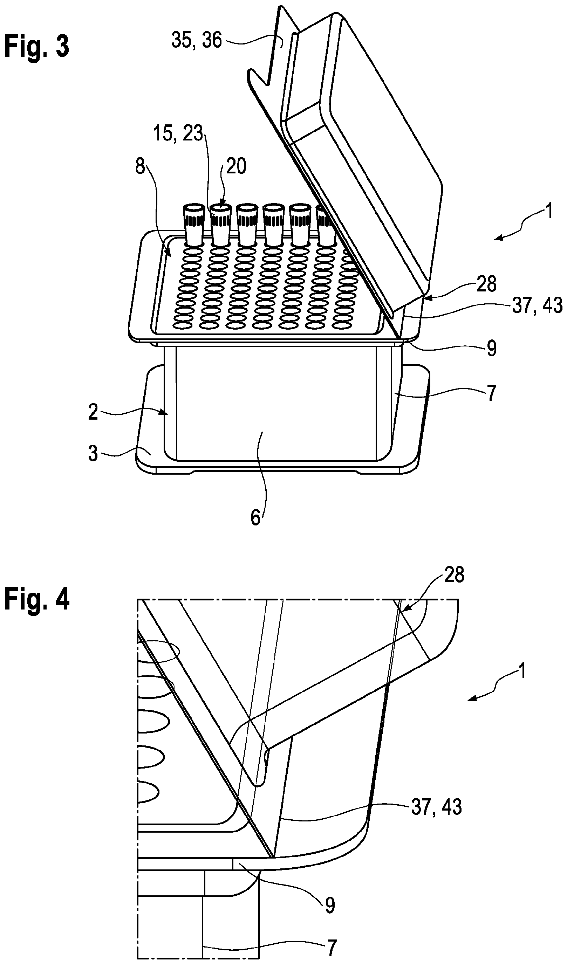

Das Ausführungsbeispiel von Fig. 4 und 5 unterscheidet sich von dem zuvor Beschriebenen dadurch, dass die Abdeckung 28 aus einem gestanzten und gefalteten Vliesmaterial oder Sterilisationspapier hergestellt ist. Die Abdeckung 28 kann aus einem einteiligen Zuschnitt gebildet sein. Hierfür kann wiederum Tyvek^{®} oder ein anderes Sterilisationspapier verwendet werden.

Zum Falten der zweiten Seitenwände 30, 31, 32, 33 in senkrechter Ausrichtung zur Deckwand 29sind die zweiten Seitenwände 30, 31, 32, 33 über Faltlinien mit der Deckwand 29 verbunden. Zum Falten des zweiten Randflansches 36 in horizontaler Ausrichtung sind Abschnitte des zweiten Randflansches 36 über weitere Faltlinien mit den zweiten Seitenwänden 30, 31, 32, 33 verbunden. Die zweiten Seitenwände 30, 31, 32, 33 sind an ihren seitlichen Rändern über weitere Faltlinien mit Staublaschen 44, 45, 46, 47 verbunden, die jeweils an den Innenseiten der benachbarten zweiten Seitenwände 30, 31, 32, 33 anliegen und mit diesen fest verbunden sind, um die Abdeckung an den Ecken abzudichten. Aus demselben Grunde überlappen die benachbarten Abschnitte des zweiten Randflansches 36 einander an den Ecken und sind dort fest miteinander verbunden.

Die Verbindungen der übereinander gelagerten Abschnitte des Vlieses oder Sterilisationspapieres aus Kunststofffasern können beispielsweise als Verschweißungen ausgebildet sein.

Der zweite Randflansch 36 ist durch eine Verschweißung abdichtend mit dem ersten Randflansch 9 verbunden. Die Verschweißung ist eine lösbare Verbindung 38, um Pipettenspitzen 14 aus der Vorrichtung 1 zu entnehmen.

Aufgrund der vollständigen Ausbildung der Abdeckung 28 aus keimundurchlässigem und wasserdampfdurchlässigem Material eignet sich diese Vorrichtung 1 besonders gut zum Autoklavieren der eingesetzten Pipettenspitzen 14.

### Bezugszeichenliste

- 1: Vorrichtung
- 2: Schale
- 3: Bodenwand
- 4-7: Seitenwand
- 8: erste Öffnung
- 9: erster Randflansch
- 10: Stützstruktur
- 11: Rippe
- 12: Stützkante
- 13: Träger
- 14: Loch
- 15: Pipettenspitze
- 16: Deckwand
- 17: Schürze
- 18: rohrförmiger Körper
- 19: untere Öffnung
- 20: obere Öffnung
- 21: konischer Anfangsabschnitt
- 22: Mittelabschnitt
- 23: Kopfabschnitt
- 24: Schulter
- 25: Sitzbereich
- 26: Dichtstruktur
- 27: Führungsstruktur
- 28: Abdeckung
- 29: Deckwand
- 30-33: zweite Seitenwand
- 34: zweite Öffnung
- 35: äußerer Rand
- 36: zweiter Randflansch
- 37: Wandstärkenverringerung
- 38: lösbare Verbindung
- 39: Aufreißlasche
- 40: Fenster
- 41: Abdeckelement
- 42: Aufdruck
- 43: Filmscharnier
- 44-47: Staublasche

## Patentansprüche

1. Vorrichtung zum Bereitstellen von Einmal-Laborartikeln unter Einhaltung eines Reinheitsgrades für Arbeiten im Labor mit
• einer Schale (2) aus einem keimundurchlässigen Material umfassend
o eine Bodenwand (3),
o erste Seitenwände (4 bis 7), die von der Bodenwand (3) nach oben vorstehen,
o eine erste Öffnung (8), die von den oberen Rändern der ersten Seitenwände (4 bis 7) umgrenzt ist,
o einen ersten Randflansch (9), der mit den oberen Rändern der ersten Seitenwände (4 bis 7) verbunden ist und um die erste Öffnung (8) umläuft und
o Stützstrukturen (10) innerhalb der ersten Seitenwände in einem Abstand von der Bodenwand,
• einem plattenförmigen Träger (13) mit
o einer Vielzahl senkrecht zur Grundfläche des Trägers (13) ausgerichteter Löcher (14),
o der in die erste Öffnung (8) eingesetzt ist und sich auf den Stützstrukturen (10) abstützt,
• einer Vielzahl Einmal-Laborartikel (15), die in die Löcher (14) des Trägers (13) eingesetzt sind,
• einer Abdeckung (28) aus einem keimundurchlässigen Material, die den Träger (12) und die darin eingesetzten Einmal-Laborartikel (15) überdeckt und mit einem umlaufenden äußeren Rand (35) auf dem ersten Randflansch (9) aufliegt und
• einer lösbaren Verbindung (38), über die der äußere Rand (35) der Abdeckung (28) umlaufend abdichtend mit dem ersten Randflansch (9) verbunden ist.

2. Vorrichtung nach Anspruch 1, bei der Abdeckung (28) und/oder die Schale (2) zumindest teilweise aus einem wasserdampfdurchlässigen und keimundurchlässigen Material besteht.

3. Vorrichtung nach Anspruch 1 oder 2, bei der die Schale (2) aus einem steifen Kunststoff besteht.

4. Vorrichtung nach einem der Ansprüche 1 bis 3, bei der die Schale (2) eine Grundfläche entsprechend einer standardisierten Mikroplatte aufweist und/oder bei der der Träger (13) eine Anordnung von Löchern (14) entsprechend der Anordnung von Vertiefungen einer standardisierten Mikroplatte aufweist.

5. Vorrichtung nach einem der Ansprüche 1 bis 4, bei der die Einmal-Laborartikel Pipettenspitzen (15) und/oder Laborgefäße sind.

6. Vorrichtung nach einem der Ansprüche 1 bis 5, bei der die Oberseite des Trägers (12) im Wesentlichen in derselben Ebene wie die Oberseite des ersten Randflansches (9) oder höher angeordnet ist.

7. Vorrichtung nach einem der Ansprüche 1 bis 6, bei der die Einmal-Laborartikel (15) von der Oberseite des Trägers (13) vorstehende Kopfabschnitte (23) aufweisen und die Abdeckung (28) einen Zentralbereich aufweist, der bezüglich des äußeren Randes (35) der Abdeckung (28) nach oben vorsteht und die Kopfabschnitte (23) der Einmal-Laborartikel (15) überdeckt.

8. Vorrichtung nach einem der Ansprüche 1 bis 7, bei der die Abdeckung (28) folgende Merkmale umfasst:
∘ eine Deckwand (29),
∘ zweite Seitenwände (30 bis 33), die von den seitlichen Rändern der Deckwand (29) nach unten vorstehen,
∘ eine zweite Öffnung (34), die von den unteren Rändern der zweiten Seitenwände (30 bis 33) umgrenzt ist und
∘ einen zweiten Randflansch (36), der mit den unteren Rändern der zweiten Seitenwände (30 bis 33) verbunden ist und um die zweite Öffnung (34) umläuft, wobei
∘ der zweite Randflansch (36) auf dem ersten Randflansch (9) aufliegt und über die lösbare Verbindung (38) umlaufend abdichtend mit diesem verbunden ist.

9. Vorrichtung nach einem der Ansprüche 1 bis 8, bei der die Abdeckung (28) insgesamt aus einem wasserdampfdurchlässigen und keimundurchlässigen Material besteht.

10. Vorrichtung nach einem der Ansprüche 1 bis 9, bei der die Schale (2) und/oder die Abdeckung (28) einen Grundkörper aus einem steifen Kunststoff mit mindestens einem Fenster (40) und mindesten ein wasserdampfdurchlässiges und keimundurchlässiges Abdeckelement (41) umfasst, dass das mindestens eine Fenster (40) abdeckt und randseitig um das Fenster (40) umlaufend abdichtend mit dem Grundkörper verbunden ist.

11. Vorrichtung nach einem der Ansprüche 8 bis 10, bei der der zweite Randflansch (36) ein zu einem unteren Rand einer der zweiten Seitenwände (30 bis 33) paralleles Filmscharnier (43) umfasst.

12. Vorrichtung nach Anspruch 11, bei der die Verbindung des zweiten Randflansches (36) mit dem ersten Randflansch (9) ausschließlich außerhalb des Filmscharniers (43) verläuft.

13. Vorrichtung nach einem der Ansprüche 1 bis 12, bei der der äußere Rand (35) durch eine lösbare Schweißverbindung (38), Siegelverbindung oder Klebeverbindung mit dem ersten Randflansch (9) verbunden ist und/oder bei der das Abdeckelement (41) durch eine Schweißverbindung, Siegelverbindung oder Klebeverbindung mit dem Grundkörper verbunden ist.

14. Vorrichtung nach einem der Ansprüche 1 bis 13, bei der die Schale (2) ein Spritzgussteil oder ein Tiefziehteil oder ein gefaltetes Teil oder eine Kombination aus einem der vorgenannten Teile mit einem flexiblen Abdeckelement (41) ist und/oder bei der der Träger (12) ein Spritzgussteil oder ein Stanzteil ist und/oder bei der die Abdeckung (28) ein Spritzgussteil oder ein Tiefziehteil oder ein gefaltetes Teil oder eine Kombination aus einem der vorgenannten Teile mit einem flexiblen Abdeckelement (41) ist.

15. Vorrichtung nach einem der Ansprüche 2 bis 14, bei der das wasserdampfdurchlässige und keimundurchlässige Material ein Vliesstoff aus Kunststofffasern oder ein Papier ist.

16. Verwendung der Vorrichtung nach einem der Ansprüche 1 bis 15, bei der die Vorrichtung (1) beim Hersteller sterilisiert und mit den Einmal-Laborartikeln (15) im sterilen Zustand an den Anwender ausgeliefert wird und/oder bei der die Vorrichtung (1) mit den darin angeordneten Einmal-Laborartikeln (15) beim Anwender sterilisiert wird.

## Geänderte Patentansprüche

### Geänderte Patentansprüche gemäss Regel 137(2) EPÜ.

1. Vorrichtung zum Bereitstellen von Einmal-Laborartikeln unter Einhaltung eines Reinheitsgrades für Arbeiten im Labor mit
• einer Schale (2) aus einem keimundurchlässigen Material umfassend
o eine Bodenwand (3),
o erste Seitenwände (4 bis 7), die von der Bodenwand (3) nach oben vorstehen,
o eine erste Öffnung (8), die von den oberen Rändern der ersten Seitenwände (4 bis 7) umgrenzt ist,
o einen ersten Randflansch (9), der mit den oberen Rändern der ersten Seitenwände (4 bis 7) verbunden ist und um die erste Öffnung (8) umläuft und
o Stützstrukturen (10) innerhalb der ersten Seitenwände in einem Abstand von der Bodenwand,
• einem plattenförmigen Träger (13) mit
o einer Vielzahl senkrecht zur Grundfläche des Trägers (13) ausgerichteter Löcher (14),
o der in die erste Öffnung (8) eingesetzt ist und sich auf den Stützstrukturen (10) abstützt,
o wobei die Oberseite des Trägers (12) im Wesentlichen in derselben Ebene wie die Oberseite des ersten Randflansches (9) oder höher angeordnet ist,
• einer Vielzahl Einmal-Laborartikel (15), die in die Löcher (14) des Trägers (13) eingesetzt sind,
• einer Abdeckung (28) aus einem keimundurchlässigen Material, die den Träger (12) und die darin eingesetzten Einmal-Laborartikel (15) überdeckt und mit einem umlaufenden äußeren Rand (35) auf dem ersten Randflansch (9) aufliegt und
• einer lösbaren Verbindung (38), über die der äußere Rand (35) der Abdeckung (28) umlaufend abdichtend mit dem ersten Randflansch (9) verbunden ist.

2. Vorrichtung nach Anspruch 1, bei der Abdeckung (28) und/oder die Schale (2) zumindest teilweise aus einem wasserdampfdurchlässigen und keimundurchlässigen Material besteht.

3. Vorrichtung nach Anspruch 1 oder 2, bei der die Schale (2) aus einem steifen Kunststoff besteht.

4. Vorrichtung nach einem der Ansprüche 1 bis 3, bei der die Schale (2) eine Grundfläche entsprechend einer standardisierten Mikroplatte aufweist und/oder bei der der Träger (13) eine Anordnung von Löchern (14) entsprechend der Anordnung von Vertiefungen einer standardisierten Mikroplatte aufweist.

5. Vorrichtung nach einem der Ansprüche 1 bis 4, bei der die Einmal-Laborartikel Pipettenspitzen (15) und/oder Laborgefäße sind.

6. Vorrichtung nach einem der Ansprüche 1 bis 5, bei der die Einmal-Laborartikel (15) von der Oberseite des Trägers (13) vorstehende Kopfabschnitte (23) aufweisen und die Abdeckung (28) einen Zentralbereich aufweist, der bezüglich des äußeren Randes (35) der Abdeckung (28) nach oben vorsteht und die Kopfabschnitte (23) der Einmal-Laborartikel (15) überdeckt.

7. Vorrichtung nach einem der Ansprüche 1 bis 6, bei der die Abdeckung (28) folgende Merkmale umfasst:
o eine Deckwand (29),
o zweite Seitenwände (30 bis 33), die von den seitlichen Rändern der Deckwand (29) nach unten vorstehen,
o eine zweite Öffnung (34), die von den unteren Rändern der zweiten Seitenwände (30 bis 33) umgrenzt ist und
o einen zweiten Randflansch (36), der mit den unteren Rändern der zweiten Seitenwände (30 bis 33) verbunden ist und um die zweite Öffnung (34) umläuft, wobei
o der zweite Randflansch (36) auf dem ersten Randflansch (9) aufliegt und über die lösbare Verbindung (38) umlaufend abdichtend mit diesem verbunden ist.

8. Vorrichtung nach einem der Ansprüche 1 bis 7, bei der die Abdeckung (28) insgesamt aus einem wasserdampfdurchlässigen und keimundurchlässigen Material besteht.

9. Vorrichtung nach einem der Ansprüche 1 bis 8, bei der die Schale (2) und/oder die Abdeckung (28) einen Grundkörper aus einem steifen Kunststoff mit mindestens einem Fenster (40) und mindesten ein wasserdampfdurchlässiges und keimundurchlässiges Abdeckelement (41) umfasst, dass das mindestens eine Fenster (40) abdeckt und randseitig um das Fenster (40) umlaufend abdichtend mit dem Grundkörper verbunden ist.

10. Vorrichtung nach einem der Ansprüche 7 bis 9, bei der der zweite Randflansch (36) ein zu einem unteren Rand einer der zweiten Seitenwände (30 bis 33) paralleles Filmscharnier (43) umfasst.

11. Vorrichtung nach Anspruch 10, bei der die Verbindung des zweiten Randflansches (36) mit dem ersten Randflansch (9) ausschließlich außerhalb des Filmscharniers (43) verläuft.

12. Vorrichtung nach einem der Ansprüche 1 bis 11, bei der der äußere Rand (35) durch eine lösbare Schweißverbindung (38), Siegelverbindung oder Klebeverbindung mit dem ersten Randflansch (9) verbunden ist und/oder bei der das Abdeckelement (41) durch eine Schweißverbindung, Siegelverbindung oder Klebeverbindung mit dem Grundkörper verbunden ist.

13. Vorrichtung nach einem der Ansprüche 1 bis 12, bei der die Schale (2) ein Spritzgussteil oder ein Tiefziehteil oder ein gefaltetes Teil oder eine Kombination aus einem der vorgenannten Teile mit einem flexiblen Abdeckelement (41) ist und/oder bei der der Träger (12) ein Spritzgussteil oder ein Stanzteil ist und/oder bei der die Abdeckung (28) ein Spritzgussteil oder ein Tiefziehteil oder ein gefaltetes Teil oder eine Kombination aus einem der vorgenannten Teile mit einem flexiblen Abdeckelement (41) ist.

14. Vorrichtung nach einem der Ansprüche 2 bis 13, bei der das wasserdampfdurchlässige und keimdurchlässige Material ein Vliesstoff aus Kunststofffasern oder ein Papier ist.

15. Verwendung der Vorrichtung nach einem der Ansprüche 1 bis 14, bei der die Vorrichtung (1) beim Hersteller sterilisiert und mit den Einmal-Laborartikeln (15) im sterilen Zustand an den Anwender ausgeliefert wird und/oder bei der die Vorrichtung (1) mit den darin angeordneten Einmal-Laborartikeln (15) beim Anwender sterilisiert wird.
